# EUROPEAN PATENT SPECIFICATION

(11) **EP 2 139 251 B1**
(45) Date of publication and mention of the grant of the patent: **24.08.2016**
(21) Application number: 07845765.2
(22) Date of filing: 30.11.2007
(51) Int. Cl.: H04W 72/04

(54) **METHOD FOR REPORTING THAT A CELL DOES NOT SUPPORT AN UPLINK HIGH-ORDER MODULATION AND APPARATUS THEREOF**
VERFAHREN ZUM MELDEN, DASS EINE ZELLE EINE AUFWÄRTSSTRECKENMODULATION HÖHERER ORDNUNG NICHT UNTERSTÜTZT UND VORRICHTUNG DAFÜR
PROCÉDÉ DESTINÉ À INDIQUER L'INCOMPATIBILITÉ D'UNE CELLULE AVEC UNE MODULATION DE LIAISON MONTANTE D'ORDRE SUPÉRIEUR ET APPAREIL ASSOCIÉ

(30) Priority: 21.03.2007 CN 200710087256
(43) Date of publication of application: 30.12.2009
(73) Proprietor: ZTE Corporation, Shenzhen, Guangdong 518057 (CN)
(72) Inventor: KE, Yazhu, Guangdong 518057 (CN)
(74) Representative: Ackroyd, Robert
(86) International application number: PCT/CN2007/003402
(87) International publication number: WO 2008/113232

(56) References cited:
- CN-A- 1 491 521
- CN-A- 1 870 814
- CN-A- 1 917 661
- KR-A- 20040 058 426
- KR-A- 20040 058 428
- US-A1- 2005 068 917
- QUALCOMM EUROPE: "Introduction of Uplink Higher Order Modulation in RNSAP", 3GPP DRAFT; R3-070235, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. St. Louis, Missouri; 20070207, 7 February 2007 (2007-02-07), XP050161161, [retrieved on 2007-02-07]
- QUALCOMM EUROPE: "Introduction of Downlink Higher Order Modulation in RNSAP", 3GPP DRAFT; R3-070366, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. St. Louis, Missouri; 20070219, 19 February 2007 (2007-02-19), XP050161271, [retrieved on 2007-02-19]
- "3rd Generation Partnership Project; Technical Specification Group Radio Access Network; UTRAN Iur interface RNSAP signalling (Release 7)", 3GPP STANDARD; 3GPP TS 25.423, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V7.4.0, 1 March 2007 (2007-03-01), pages 1-788, XP050368547,

## Description

### Filed of the Invention

The present invention relates to wireless communication field, in particular to a method and device for reporting that a cell does not support an uplink high-order modulation, with which the Drift Radio Network Controller (RNC) reports that the related cell managed by the Drift RNC does not support high-order modulation.

### Background of the Invention

The Access Network includes one or more radio network sub-systems, each of which is one sub-network of the access network, including one Radio Network Controller and one or more Nodes B. The RNC is responsible for controlling the network elements of the Access Network radio resource. The mainly functions of Node B is to process the physical layer of the air interface, and at the same time to perform some basic management on radio resource.

When User Equipment (UE) establishes communication relationship with a plurality of the RNC, if different RNC is connected with each other via Iur port, then the RNC in charge of connecting the UE and Core Network (CN) is called Serving Radio Network Controller (SRNC), and the RNC, which is in charge of transmitting the signaling and data of the UE but having no connection with the CN, is called Drift RNC. In addition, the Drift RNC is also in charge of transmitting the supportive ability of the cell of the Node B managed by the Drift RNC to the Serving RNC.

In the technical optimization of existing system, in order to improving user experience quality and system throughput, High Speed Uplink Package Access (HSUPA) technology is developing and 16QAM (Quadrature Amplitude Modulation) high-order modulation scheme has been introduced so far.

However, as such technology is newly introduced into the system, only new Node B device type can support this technology but old Node B device type can not. As for the terminal that supports such technology, the functions of such technology can be normally fulfilled only with the cooperation with the Node B supporting such technology. When determining whether to use such technology, access network side needs to take the backwards compatibility into consideration and estimates whether the Node B can use such technology so as to make a decision accurately.

Consequentially, it is desired to solve the above problem with a method and device which can report that a cell does not support uplink high-order modulation, so as to assure the normal communication of the UE.

The following listed documents D1-D2 are related art.
- **D1**: QUALCOMM EUROPE: "Introduction of Uplink Higher Order Modulation in RNSAP", 3GPP DRAFT; R3-070235, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. St. Louis, Missouri; 20070207, 7 February 2007 (2007-02-07), XP050161161
- **D2**: US 2005/068917 A1

D1 relates to Introduction of Uplink Higher Order Modulation in RNSAP.

D2 relates to providing and maintaining F-PDCH service in a mobile communication system. Upon receiving an indication that the mobile station intends to switch from a F-PDCH of a serving cell to a F-PDCH of a target cell for continued data transmission service, the network equipment determines whether the target cell is presently available to provide the F-PDCH service to the mobile station. When the selected cell is not able to support F-PDCH service for the mobile station (e.g., because of F-PDCH loading, quality of service requirements, etc.), the network equipment sends an indication to the mobile station that the target cell is presently unavailable to provide F-PDCH data transmission service to the mobile station. Thus, the mobile station is able to abort switching to the selected cell and prevent losing its F-PDCH service as a result.

D1 (see in particular paragraphs 8.3.1 and 9.2.2.xx) discloses that the D-RNC reports to the S-RNC that the related cell managed by the D-RNC does not support uplink high-order modulation (see in particular "16QAM UL Support Indicator" on the front page and in paragraph 9.2.2.xx; see also "16QAM ULNot Supported" in paragraph 9.2.2.xx).

D2 (see in particular paragraph [0069]) discloses an example of messaging related to indicating that a cell does not support a particular feature.

### Summary of the Invention

The present invention provides a method and device for reporting that a cell does not support uplink high-order modulation in which Drift RNC is used to report to the SRNC that the cell managed by the Drift RNC does not support the uplink high-order modulation, such that the SRNC obtains such information to participate in decision whether stopping the uplink high-order modulation on the UE or deleting the link of the cell that does not support the uplink high-order modulation, so as to guarantee the normal communication of the UE.

With one aspect of the present invention, it is provided a method for reporting a cell does not support the uplink high-order modulation, which is used to report by a Drift RNC that a related cell managed by the Drift RNC does not support the uplink high-order modulation. The method comprises the steps: when the Drift RNC detects that the related cell managed by the Drift RNC does not support the uplink high-order modulation, the Drift RNC, reports to a Serving RNC the information that the related cell does not support the uplink high-order modulation by signaling; wherein the related cell is configured to transmit signaling and data with User Equipment, UE, and the Serving RNC, and to establish radio link with the Drift RNC; reporting to a Serving RNC the information that the related cell does not support the uplink high-order modulation by signaling is achieved by adding the information of not supporting the uplink high-order modulation into the cause value of a current interface element.

Meanwhile, the detection is actuated either by the Drift RNC, or by a request that the Serving RNC initiates.

The request includes anyone or the combination thereof from the following: radio link setup request, radio link addition request, radio link reconfiguration prepare, and radio link reconfiguration request.

According to one aspect of the present invention, the signaling corresponding to the actuation of the Drift RNC is error indication message, the signaling corresponding to the radio link setup request is radio link setup failure message, the signaling corresponding to the radio link addition request is radio link addition failure message; and the signaling corresponding to the radio link reconfiguration prepare or to the radio link reconfiguration request is radio link reconfiguration failure message.

Meanwhile, quantity of the related cell is one or more.

The uplink high-order modulation is anyone of uplink 16QAM, 64QAM, or OQAM (Offset Quadrature Amplitude Modulation) modulation schemes.

With another aspect of the present invention, it is further provided a device for reporting that a cell does not support the uplink high-order modulation, which is used to report by a Drift Radio Network Controller RNC that a related cell managed by the Drift RNC does not support the uplink high-order modulation. The device comprises a detecting unit for receiving an actuation from the Drift RNC or an request initiated by the Serving RNC ,and detecting whether the related cell managed by the Drift RNC does not support the uplink high-order modulation; and a reporting unit for obtaining the detection unit detects that the related cell does not support the uplink high-order modulation, and reporting to a Serving RNC the information that the related cell does not support the uplink high-order modulation by signaling, wherein the related cell is configured to transmit signaling and data with User Equipment, UE, and the Serving RNC, and to establish radio link with the Drift RNC, and quantity of the related cell is one or more; the reporting unit for adding the information of not supporting the uplink high-order modulation into the cause value of a current interface element.

Meanwhile, the request includes anyone or the combination thereof from the following: a radio link setup request, a radio link addition request, a radio link reconfiguration prepare, and a radio link reconfiguration request.

According to another aspect of the present invention, the signaling corresponding to the actuation of the Drift RNC is error indication message, the signaling corresponding to the radio link setup request is radio link setup failure message, the signaling corresponding to the radio link addition request is radio link addition failure message; and the signaling corresponding to the radio link reconfiguration prepare or to the radio link reconfiguration request is radio link reconfiguration failure message, wherein the quantity of the related cell is one or more.

According to another aspect of the present invention, the report by signaling is achieved by addition the information of not supporting the uplink high-order modulation into the cause value of the current cell. The uplink high-order modulation is anyone of uplink 16QAM, 64QAM, and OQAM modulation scheme.

Additionally, according to one aspect of the present invention, the related cell is the one that needs to transmit signaling and data between the UE and the SRNC and establish radio link with the Drift RNC.

As a result, with the present invention, it is provided a method and device with which a Drift RNC reports that the cell managed by it does not support the uplink high-order modulation. In the method and the device, the Drift RNC reports to the SRNC that the cell managed by the Drift RNC does not support the uplink high-order modulation, such that the SRNC obtains such information to participate in decision whether stopping the uplink high-order modulation on the UE or deleting the link of the cell which does not support the uplink high-order modulation, so as to guarantee the normal communication of the UE.

Other features and advantages of the present invention will be set forth in the following description and become obvious partly from the description, or learned by implementing the present invention. The objects and other advantages of the present invention can be achieved or obtained by the written description and Claims as well as the specified structures indicated in the figures.

### Brief Description of the Drawings

The **drawings** in the specification are provided for a further understanding of the present invention and constitute a part of the application. The drawings, along with the preferable embodiments of the present invention, are used for explaining the present invention but not for limiting the present invention, and wherein:
Fig 1 is an interaction diagram of the method for reporting that a cell does not support the uplink high-order modulation according to the first embodiment of the present invention;
Fig 2 is an interaction diagram of the method for reporting that a cell does not support the uplink high-order modulation according to the second embodiment of the present invention; and
Fig 3 is a block diagram of the device for reporting that a cell does not support the uplink high-order modulation according to the embodiment of the present invention.

### Detailed Description

Hereinafter, the preferable embodiment of the present invention is described in conjunction with drawings. It can be understood that the preferable embodiments described herein are only used for describing and explaining the present invention but not for limiting the present invention.

The fundamental concept of the present invention is to provide a method and device in which the Drift RNC reports that the cell managed by the Drift RNC does not support the uplink high-order modulation. In the method and the device, the Drift RNC reports to the SRNC that the cell managed by the Drift RNC does not support the uplink high-order modulation, such that the SRNC obtains such information to participate in deciding to stop the uplink high-order modulation on the UE or to delete the link of the cell which does not support the uplink high-order modulation, so as to guarantee the normal communication of the UE.

A method for reporting that a cell does not support uplink high-order modulation comprises the following steps: when the Drift RNC detects that the related cell managed by it does not support the uplink high-order modulation, the Drift RNC, by signaling, reports to the SRNC the information that the related cell does not support the uplink high-order modulation.

Wherein, the detection is actuated either by the Drift RNC, or by the request that the SRNC initiates.

Said request includes anyone or the combination thereof from a radio link setup request, a radio link addition request, a radio link reconfiguration prepare, and a radio link reconfiguration request.

In addition, the signaling corresponding to the actuation of the Drift RNC is error indication message, the signaling corresponding to the radio link setup request is radio link setup failure message, the signaling corresponding to the radio link addition request is radio link addition failure message; and the signaling corresponding to the radio link reconfiguration prepare or the radio link reconfiguration request is radio link reconfiguration failure message.

Wherein, the number of the related cell may be one or more. The report by signaling is achieved by addition the information of not supporting the uplink high-order modulation into the cause value of the current cell. The uplink high-order modulation is anyone of uplink 16QAM, 64QAM, and OQAM modulation scheme.

The related cell is the one that needs to transmit signaling and data with the UE and the SRNC and to establish radio link with the Drift RNC.

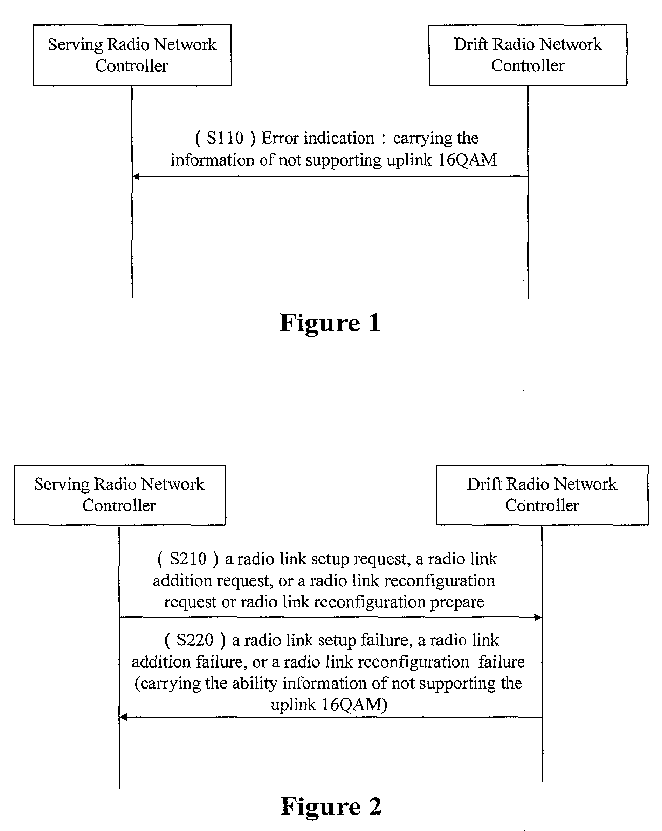

Fig 1 is an interaction diagram of the method for reporting that a cell does not support uplink high-order modulation according to the first embodiment of the present invention and Fig 2 is an interaction diagram for the method of reporting that a cell does not support uplink high-order modulation according to the second embodiment of the present invention.

The method of reporting that a cell does not support uplink high-order modulation according to the present invention is described in detail in conjunction with Figs 1 and 2.

### The First Embodiment

Fig 1 is an interaction diagram for the method of reporting that a cell does not support uplink high-order modulation according to the first embodiment of the present invention. As shown in Fig 1, it is provided a method in which the Drift RNC, by means of error indication message, reports that the cell managed by the Drift RNC does not support the uplink high-order modulation ability, which comprising the following steps:
Step S110: when the Drift RNC detects that the related cell does not support uplink 16QAM modulation scheme, the Drift RNC sends an error indication message to the Serving RNC, wherein the error indication message carries the information of not supporting the uplink 16QAM which is achieved by addition the information of not supporting the uplink high-order modulation into the cause value of the current cell.

Wherein, the related cell is the one that needs to transmit signaling and data with the user device and the Serving RNC and to establish radio link with the Drift RNC.

### The Second Embodiment

Fig 2 is an interaction diagram for the method of reporting that a cell does not support uplink high-order modulation according to the second embodiment of the present invention. As shown in Fig 2, it is provided a method in which a Drift RNC reports that the cell managed by it does not support the uplink high-order modulation ability by means of radio link setup failure message, addition failure message, or reconfiguration failure message, which comprising the following steps:
Step S210: the SRNC sends to the Drift RNC a radio link setup request, a radio link addition request, or a radio link reconfiguration or radio link reconfiguration prepare message; and
Step S220: when the Drift RNC detects that the radio link configuration, which the SRNC establishes, adds, or reconfigurates for the Drift RNC, uses uplink 16QAM modulation scheme, the Drift RNC sends to the SRNC a radio link setup failure, a radio link addition failure, or a radio link reconfiguration failure message, wherein the ability information of not supporting the uplink 16QAM is carried, which is achieved by addition the information of not supporting the uplink high-order modulation into the cause value of the current cell.

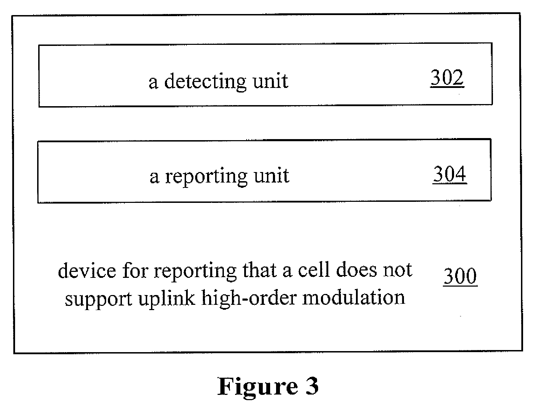

Fig 3 is a block diagram of the device 300 of reporting that a cell does not support the uplink high-order modulation according to the embodiment of the present invention. As shown in Fig 3, the device comprises: a detecting unit 302 which detects whether the related cell managed by the Drift RNC does not support the uplink high-order modulation when receiving the actuation from the Drift RNC or the request initiated by the SRNC; and a reporting unit 304 which reports, by signaling, to the SRNC the information that the related cell does not support the uplink high-order modulation when the detection unit 302 detects that the related cell does not support the uplink high-order modulation.

Wherein, the request can include anyone or the combination thereof from the following: a radio link setup request, a radio link addition request, a radio link reconfiguration prepare and a radio link reconfiguration request.

The signaling corresponding to the actuation of the Drift RNC is error indication message, the signaling corresponding to the radio link setup request is radio link setup failure message, the signaling corresponding to the radio link addition request is radio link addition failure message; and the signaling corresponding to the radio link reconfiguration prepare or the radio link reconfiguration request is radio link reconfiguration failure message, wherein the number of the related cell may be one or more.

Additionally, the report by signaling can be achieved by addition the information of not supporting the uplink high-order modulation into the cause value of the current interface element. The uplink high-order modulation can be uplink 16QAM, 64QAM, or OQAM modulation scheme. The related cell is the one that needs to transmit signaling and data with the UE and the SRNC, and establish radio link with the Drift RNC.

In conclusion, with the present invention, the SRNC obtains the above information to make the decision of either stopping the uplink high-order modulation on UE or deleting the link of the cell which does not support the uplink high-order modulation, so as to guarantee the normal communication of the UE.

The above is only the preferable embodiments of the present invention, but not used for limiting the present invention. As for those skilled in the art, various modifications and variations can be made to the present invention.

## Claims

1. A method for reporting that a cell does not support uplink high-order modulation, which is used to report by a Drift Radio Network Controller RNC that a related cell managed by the Drift RNC does not support the uplink high-order modulation, the method comprising the following steps:
when the Drift RNC detects that the related cell managed by the Drift RNC does not support the uplink high-order modulation, the Drift RNC reports to a Serving RNC the information that the related cell does not support the uplink high-order modulation by signaling;
**characterized in that**,
the related cell is configured to transmit signaling and data with User Equipment, UE, and the Serving RNC, and to establish radio link with the Drift RNC; and
reporting to the Serving RNC the information that the related cell does not support the uplink high-order modulation by signaling is achieved by adding the information of not supporting the uplink high-order modulation into the cause value of a current interface element.

2. The method according to Claim 1, **characterized in that**, the detection is actuated either by the Drift RNC, or by a request that the Serving RNC initiates.

3. The method according to Claim 2, **characterized in that**, the request includes anyone or the combination thereof from the following: a radio link setup request, a radio link addition request, a radio link reconfiguration prepare, and a radio link reconfiguration request.

4. The method according to Claim 3, **characterized in that**, the signaling corresponding to the actuation of the Drift RNC is error indication message, the signaling corresponding to the radio link setup request is radio link setup failure message, the signaling corresponding to the radio link addition request is radio link addition failure message; and the signaling corresponding to the radio link reconfiguration prepare or to the radio link reconfiguration request is radio link reconfiguration failure message.

5. The method according to Claim 1, **characterized in that**, quantity of the related cell is one or more.

6. The method according to anyone of Claims 1 to 5, **characterized in that**, the uplink high-order modulation is anyone of uplink 16QAM, 64QAM, and OQAM modulation schemes.

7. A device for reporting that a cell does not support uplink high-order modulation, which is used to report by a Drift Radio Network Controller RNC that a related cell managed by the Drift RNC does not support the uplink high-order modulation, the device comprising:
a detecting unit for receiving an actuation from the Drift RNC or an request initiated by the Serving RNC ,and detecting whether the related cell managed by the Drift RNC does not support the uplink high-order modulation ; and
a reporting unit for obtaining that the detection unit detects that the related cell does not support the uplink high-order modulation, and reporting to a Serving RNC the information that the related cell does not support the uplink high-order modulation by signaling;
**characterized in that**,
the related cell is configured to transmit signaling and data with User Equipment, UE, and the Serving RNC, and to establish radio link with the Drift RNC, and quantity of the related cell is one or more; and
wherein the reporting unit is configured for adding the information of not supporting the uplink
high-order modulation into the cause value of a current interface element.

8. The device according to Claim 7, **characterized in that**, the request includes anyone or the combination thereof from the following: a radio link setup request, a radio link addition request, a radio link reconfiguration prepare, and a radio link reconfiguration request.

9. The device according to Claim 8, **characterized in that**, the signaling corresponding to the actuation of the Drift RNC is error indication message, the signaling corresponding to the radio link setup request is radio link setup failure message, the signaling corresponding to the radio link addition request is radio link addition failure message; and the signaling corresponding to the radio link reconfiguration prepare or to the radio link reconfiguration request is radio link reconfiguration failure message.

10. The device according to Claim 7, **characterized in that**, the reporting unit comprising: adding module for adding the information of not supporting the uplink high-order modulation into the cause value of the current interface element and the uplink high-order modulation is anyone of uplink 16QAM, 64QAM, and OQAM modulation schemes.

## Patentansprüche

1. Verfahren zum Melden, dass eine Zelle keine Uplink-Modulation höherer Ordnung unterstützt, das zum Melden durch einen Drift-RNC (Radio Network Controller) benutzt wird, dass eine von dem Drift-RNC verwaltete verwandte Zelle die Uplink-Modulation höherer Ordnung nicht unterstützt, wobei das Verfahren die folgenden Schritte beinhaltet:
Melden durch Signalisierung durch den Drift-RNC, wenn er erkennt, dass die von dem Drift-RNC verwaltete verwandte Zelle die Uplink-Modulation höherer Ordnung nicht unterstützt, der Information, dass die verwandte Zelle die Uplink-Modulation höherer Ordnung nicht unterstützt, an einen Serving-RNC;
**dadurch gekennzeichnet, dass**
die verwandte Zelle so konfiguriert ist, dass sie Signalisierung und Daten mit einem Benutzergerät UE und dem Serving-RNC sendet und eine Funkverbindung mit dem Drift-RNC aufbaut; und
das Melden durch Signalisieren der Information, dass die verwandte Zelle die Uplink-Modulation höherer Ordnung nicht unterstützt, an den Serving-RNC durch Addieren der Information der Nichtunterstützung der Uplink-Modulation höherer Ordnung zum Ursachenwert eines aktuellen Schnittstellenelements erzielt wird.

2. Verfahren nach Anspruch 1, **dadurch gekennzeichnet, dass** die Erkennung entweder durch den Drift-RNC oder durch eine von dem Serving-RNC eingeleitete Anforderung aktiviert wird.

3. Verfahren nach Anspruch 2, **dadurch gekennzeichnet, dass** die Anforderung eine beliebige oder eine Kombination der Folgenden beinhaltet: eine Funkverbindungs-Einrichtungsanforderung, eine Funkverbindungs-Additionsanforderung, eine Funkverbindungs-Umkonfigurationsvorbereitung und eine Funkverbindungs-Umkonfigurationsanforderung.

4. Verfahren nach Anspruch 3, **dadurch gekennzeichnet, dass** die der Aktivierung des Drift-RNC entsprechende Signalisierung eine Fehleranzeigenachricht ist, wobei die der Funkverbindungs-Einrichtungsanforderung entsprechende Signalisierung eine Funkverbindungseinrichtung-Erfolglosnachricht ist; wobei die der Funkverbindungs-Additionsanforderung entsprechende Signalisierung eine Funkverbindungsaddition-Erfolglosnachricht ist; und wobei die der Funkverbindungs-Umkonfigurationsvorbereitung oder der Funkverbindungs-Umkonfigurationsanforderung entsprechende Signalisierung eine Funkverbindungsumkonfiguration-Erfolglosnachricht ist.

5. Verfahren nach Anspruch 1, **dadurch gekennzeichnet, dass** die Anzahl der verwandten Zelle eins oder mehr ist.

6. Verfahren nach einem der Ansprüche 1 bis 5, **dadurch gekennzeichnet, dass** die Uplink-Modulation höherer Ordnung eine beliebige aus 16QAM, 64QAM und OQAM Uplink-Modulationsschemata ist.

7. Vorrichtung zum Melden, dass eine Zelle keine Uplink-Modulation höherer Ordnung unterstützt, die zum Melden durch einen Drift-RNC (Radio Network Controller) benutzt wird, dass eine von dem Drift-RNC verwaltete verwandte Zelle die Uplink-Modulation höherer Ordnung nicht unterstützt, wobei die Vorrichtung Folgendes umfasst:
eine Erkennungseinheit zum Empfangen einer Aktivierung von dem Drift-RNC oder einer von dem Serving-RNC eingeleiteten Anforderung, und Erkennen, ob die von dem Drift-RNC verwaltete verwandte Zelle die Uplink-Modulation höherer Ordnung nicht unterstützt; und
eine Meldeeinheit zum Erfahren, dass die Erkennungseinheit erkennt, dass die verwandte Zelle die Uplink-Modulation höherer Ordnung nicht unterstützt, und Melden durch Signalisieren der Information, dass die verwandte Zelle die Uplink-Modulation höherer Ordnung nicht unterstützt, an einen Serving-RNC;
**dadurch gekennzeichnet, dass**
die verwandte Zelle zum Senden von Signalierung und Daten mit einem Benutzergerät UE und dem Serving-RNC und zum Aufbauen einer Funkverbindung mit dem Drift-RNC konfiguriert ist und die Anzahl der verwandten Zelle eins oder mehr ist; und
wobei die Meldeeinheit zum Addieren der Information der Nichtunterstützung der Uplink-Modulation höherer Ordnung zum Ursachenwert eines aktuellen Schnittstellenelements konfiguriert ist.

8. Vorrichtung nach Anspruch 7, **dadurch gekennzeichnet, dass** die Anforderung eine beliebige oder eine Kombination der Folgenden beinhaltet: eine Funkverbindungs-Einrichtungsanforderung, eine Funkverbindungs-Additionsanforderung, eine Funkverbindungs-Umkonfigurationsvorbereitung und eine Funkverbindungs-Umkonfigurationsanforderung.

9. Vorrichtung nach Anspruch 8, **dadurch gekennzeichnet, dass** die der Aktivierung des Drift-RNC entsprechende Signalisierung eine Fehleranzeigenachricht ist, die der Funkverbindungs-Einrichtungsanforderung entsprechende Signalisierung eine Funkverbindungseinrichtung-Erfolglosnachricht ist, die der Funkverbindungs-Additionsanforderung entsprechende Signalisierung eine Funkverbindungsaddition-Erfolglosnachricht ist; und die der Funkverbindungs-Umkonfigurationsvorbereitung oder der Funkverbindungs-Umkonfigurationsanforderung entsprechende Signalisierung eine Funkverbindungsumkonfiguration-Erfolglosnachricht ist.

10. Vorrichtung nach Anspruch 7, **dadurch gekennzeichnet, dass** die Meldeeinheit Folgendes beinhaltet: ein Addiermodul zum Addieren der Information der Nichtunterstützung der Uplink-Modulation höherer Ordnung zum Ursachenwert des aktuellen Schnittstellenelements, und die Uplink-Modulation höherer Ordnung eine beliebige aus 16QAM, 64QAM und OQAM Uplink-Modulationsschemata ist.

## Revendications

1. Un procédé de signalement qu'une cellule ne prend pas en charge une modulation d'ordre supérieur en liaison montante, qui est utilisé de façon à signaler par un contrôleur de réseau radio de dérive RNC qu'une cellule reliée gérée par le RNC de dérive ne prend pas en charge la modulation d'ordre supérieur en liaison montante, le procédé comprenant les opérations suivantes :
lorsque le RNC de dérive détecte que la cellule reliée gérée par le RNC de dérive ne prend pas en charge la modulation d'ordre supérieur en liaison montante, le RNC de dérive signale à un RNC de desserte les informations selon lesquelles la cellule reliée ne prend pas en charge la modulation d'ordre supérieur en liaison montante par une signalisation,
**caractérisé en ce que**
la cellule reliée est configurée de façon à transmettre une signalisation et des données avec un équipement d'utilisateur, UE, et le RNC de desserte, et de façon à établir une liaison radio avec le RNC de dérive, et
le signalement au RNC de desserte des informations selon lesquelles la cellule reliée ne prend pas en charge la modulation d'ordre supérieur en liaison montante par une signalisation est effectué par l'ajout des informations de non prise en charge de la modulation d'ordre supérieur en liaison montante dans la valeur de cause d'un élément d'interface actuel.

2. Le procédé selon la Revendication 1, **caractérisé en ce que** la détection est actionnée soit par le RNC de dérive ou par une demande que le RNC de desserte initie.

3. Le procédé selon la Revendication 2, **caractérisé en ce que** la demande comprend un élément quelconque ou la combinaison de ceux-ci parmi les éléments suivants : une demande d'établissement de liaison radio, une demande d'ajout de liaison radio, une préparation de reconfiguration de liaison radio et une demande de reconfiguration de liaison radio.

4. Le procédé selon la Revendication 3, **caractérisé en ce que** la signalisation correspondant à l'actionnement du RNC de dérive est un message d'indication d'erreur, la signalisation correspondant à la demande d'établissement de liaison radio est un message d'échec d'établissement de liaison radio, la signalisation correspondant à la demande d'ajout de liaison radio est un message d'échec d'ajout de liaison radio et la signalisation correspondant à la préparation de reconfiguration de liaison radio ou à la demande de reconfiguration de liaison radio est un message d'échec de reconfiguration de liaison radio.

5. Le procédé selon la Revendication 1, **caractérisé en ce que** la quantité de la cellule reliée est un ou plusieurs.

6. Le procédé selon l'une quelconque des Revendications 1 à 5, **caractérisé en ce que** la modulation d'ordre supérieur en liaison montante est un mécanisme de modulation quelconque parmi les mécanismes de modulation 16QAM, 64QAM et OQAM en liaison montante.

7. Un dispositif de signalement qu'une cellule ne prend pas en charge une modulation d'ordre supérieur en liaison montante, qui est utilisé de façon à signaler par un contrôleur de réseau radio de dérive RNC qu'une cellule reliée gérée par le RNC de dérive ne prend pas en charge la modulation d'ordre supérieur en liaison montante, le dispositif comprenant :
une unité de détection destinée à la réception d'un actionnement à partir du RNC de dérive ou d'une demande initiée par le RNC de desserte, et la détection si la cellule reliée gérée par le RNC de dérive ne prend pas en charge la modulation d'ordre supérieur en liaison montante, et
une unité de signalement destinée à l'obtention que l'unité de détection détecte que la cellule reliée ne prend pas en charge la modulation d'ordre supérieur en liaison montante, et au signalement à un RNC de desserte des informations selon lesquelles la cellule reliée ne prend pas en charge la modulation d'ordre supérieur en liaison montante par une signalisation,
**caractérisé en ce que**
la cellule reliée est configurée de façon à transmettre une signalisation et des données avec un équipement d'utilisateur, UE, et le RNC de desserte, et à établir une liaison radio avec le RNC de dérive, et la quantité de la cellule reliée est un ou plusieurs, et
où l'unité de signalement est configurée de façon à ajouter les informations de non prise en charge de la modulation d'ordre supérieur en liaison montante à la valeur de cause d'un élément d'interface actuel.

8. Le dispositif selon la Revendication 7, **caractérisé en ce que** la demande comprend un élément quelconque ou la combinaison de ceux-ci parmi les éléments suivants : une demande d'établissement de liaison radio, une demande d'ajout de liaison radio, une préparation de reconfiguration de liaison radio et une demande de reconfiguration de liaison radio.

9. Le dispositif selon la Revendication 8, **caractérisé en ce que** la signalisation correspondant à l'actionnement du RNC de dérive est un message d'indication d'erreur, la signalisation correspondant à la demande d'établissement de liaison radio est un message d'échec d'établissement de liaison radio, la signalisation correspondant à la demande d'ajout de liaison radio est un message d'échec d'ajout de liaison radio et la signalisation correspondant à la préparation de reconfiguration de liaison radio ou à la demande de reconfiguration de liaison radio est un message d'échec de reconfiguration de liaison radio.

10. Le dispositif selon la Revendication 7, **caractérisé en ce que** l'unité de signalement comprend : l'ajout d'un module destiné à l'ajout des informations de non prise en charge de la modulation d'ordre supérieur en liaison montante à la valeur de cause de l'élément d'interface actuel et la modulation d'ordre supérieur en liaison montante est un mécanisme de modulation quelconque parmi les mécanismes de modulation 16QAM, 64QAM et OQAM en liaison montante.
